# EUROPEAN PATENT APPLICATION

(11) **EP 4 650 044 A1**
(43) Date of publication of application: **19.11.2025**
(21) Application number: 24275061.0
(22) Date of filing: 14.05.2024
(51) Int. Cl.: B01J 19/00, B01J 19/24

(54) **IMPROVED FLOW SYNTHESIS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The invention relates to a method for the flow synthesis manufacture of energetic materials with a two stage-temperature reactor. There is provided a flow reactor for the synthesis of energetic materials, comprising;
i. a first input flow reagent, and a second input flow reagent
ii. a flow reactor, comprising at least two temperature zones within the reactor.

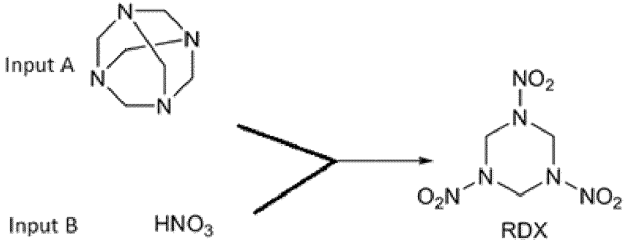

## Description

The following invention relates to methods of producing explosives by flow synthesis. Particularly to methods of nitrating hexamine to produce RDX.

Before the present invention is described in further detail, it is to be understood that the invention is not limited to the particular embodiments described, as such may, of course, vary. It is also to be understood that the terminology used herein is for the purpose of describing particular embodiments only, and is not intended to be limiting, since the scope of the present invention will be limited only by the appended claims.

According to a first aspect of the invention there is provided a flow reactor for the synthesis of energetic materials, comprising;
a first input flow reagent, and a second input flow reagent,
a flow reactor, comprising at least two temperature zones within the flow reactor; preferably wherein the first temperature is less than the second temperature.

The use of flow synthesis provides a facile means of preparing RDX at both laboratory R&D scale of ~100g, and to provide the ability to add further flow reactors to readily scale up production, without the associated dangers of forming +100Kgs of RDX explosive in a single reactor vessel. Further, it also avoids the use of hundreds of litres of highly concentrated acid in a large reactor vessel in a batch process. The use of flow synthesis allows for the continuous removal and safe stowage of final explosive product RDX material from the flow reactor or flow reactors, to avoid the build-up of large quantities of explosive material. This may allow explosive processing buildings to process a greater mass of explosive and/or associated safety distances to be reduced, as the explosive material may be distributed to safe areas, away from the flow reactor, as it is synthesised.

The flow reactor may comprise:
a mixing zone, comprising at least one mixing plate to mix together both the first input flow reagent, and the second input flow reagents, said mixing zone maintained at a first temperature in a first temperature zone, and
a reaction zone, comprising at least one residence plate which forms the microchannel path in which the reaction occurs, said reaction zone maintained at a second temperature in the second temperature zone;
preferably wherein the first temperature is less than the second temperature.

The mixing zone is where the input flow reagents are brought together to mix in order to start a chemical reaction. A flow reactor may comprise more than one mixing zone, as further input flow reagents may be added after a first reaction has completed.

There may be third, fourth of further input flow reagents.

The mixing zone may comprise at least one further residence plate, such that the mixing plate and the further residence plate are maintained at the first temperature zone. The mixing of chemicals, and typically the case for the synthesis of energetic materials, is an exothermic reaction. Whilst the mixing plate will experience an exothermic reaction, the initial transfer into a further residence plate (i.e. the core of the flow reactor where the reaction takes place), the initial reaction may still be highly exothermic and the removal of excess heat, may help to control the reaction, especially from a safety perspective.

The reaction zone may comprise one, two or a plurality of residence plates, all maintained at the second temperature zone. There may be a third, fourth or further temperature zones, within the reactor- each temperature zone being held at a third, fourth or further temperature.

Many reactions are stepwise, such that after an intermediate product has been formed a further reagent is required, or a protection group removed, in one arrangement after the reaction zone, there may be a further mixing zone, to introduce a further input flow reagent. There may be yet further reaction zones after the further mixing zone.

There may be third, fourth of further input flow reagents, added in the mixing zone or further mixing zones.

The reaction zone is where the reaction proceeds to take place with the mixed input flow reagents, from the mixing zone. The reaction zone may have any number of residence plates, the number of plates determines the physical length of the micro flow channel, and therefore how long the reaction time proceeds. The transition time for the mixed input flow reagents through the reaction zone, may be determined by the length of micro flow channel ie the number of residence plates, and also by the pressure (especially where gas evolution is involved) - ie the flow rate. The temperature of the second temperature zone is elevated to drive the reaction to completion and obtain higher yields, and quicker throughput times.

The first temperature zone, second temperature zone and any further temperature zone may be held at a selected temperature by any heating or cooling means, such as by electrical heaters, water/oil circulators, heat exchangers, clearly naked flames are possible, but are not safe practice.

Preferably the first temperature zone comprises a first water circulator and the second temperature zone comprises a second water circulator. Preferably each zone comprises its own heating or cooling means. The temperature with the mixing zone or reaction zone may be actively monitored such that the rate of heating and cooling may be selected to maintain the temperature range within each first, second or further temperature zones.

The mixing plates and/or residence plates may be selected from any high thermally conductive material, such as metal or conductive ceramic. The synthesis of energetic materials typically comprises highly corrosive acids, such as for example nitric and or sulphuric acids, so the mixing plates and/or residence plates are preferably inert with respect to the reagents, ie resistant to corrosion by means of contact with the reagents and impurities or combinations thereof. Preferably a suitable engineering conductive ceramic is silicon carbide.

In a preferred arrangement the mixing zone temperature is less than 30°C, more preferably less than 20°C , preferably in the range of from -30°C to +30°C,, preferably - 20°C to +15°C, more preferably -15°C to +15 °C, preferably less than 10°C.

In a preferred arrangement the reaction zone temperature is greater than 20°C, preferably greater than 30°C, in a preferred arrangement in the range of from 20°C to 90°C.

The first input flow reagent (A) and second input flow reagent (B) are selected to provide an energetic material or energetic material precursor when passed through the reactor. The energetic material produced may be a poly nitrated organic material, such as for example nitramine, aromatic, aromatic heterocycle, aliphatic hydrocarbon. An energetic material precursor may be an intermediate chemical moiety that requires a further step or working up to form the energetic material.

Input flow reagent A may be an energetic material precursor ie one which reacts to for an energetic material The precursor may be selected, such as, for example, from an aromatic compound, phenylamines, cycloamines, toluene, Octahydro-1,3,5,7-tetranitro-1,3,5,7-tetrazocine (TAT), 1,3,5-triacetyl-1,3,5-triazacyclohexanes (TRAT), 1,5-Dinitroendomethylene-1,3,5,7-tetraazacyclooctane (DPT), triazole, and hexamethylenetetramine, and hexamine. The formation of the TAT, TRAT and DPT may require several synthetic steps, but can be safely made using conventional batch techniques as they are not energetic materials.

Input flow reagent B, may comprise a highly concentrated nitrating agent, such as conc nitric acid, preferably greater than 95%concentration, yet more preferably greater than 99% concentration nitric acid. Further acids, nitration species just as ammonium nitrate, may be added.

Typical energetic materials synthesised by this route may be, such as, for example Energetic polymers such as for example, polyNIMMO (poly(3-nitratomethyl-3-methyloxetane), polyGLYN (poly glycidyl nitrate) and GAP (glycidyl azide polymer).

Examples of preferred energetic secondary explosives, may be, such as, for example, heteroalicyclic nitramines are RDX (cyclo-1,2,3-trimethylene-2,4,6-trinitramine, Hexogen), HMX (cyclo-1,3,5,7-tetramethylene-2,4,6,8-tetranitramine, Octogen), and mixtures thereof. The explosive component may TATND (tetranitro-tetraminodecalin), HNS (hexanitrostilbene), TATB (triaminotrinitrobenzene), NTO (3-nitro-1,2,4-triazol-5-one), HNIW (2,4,6,8,10,12-hexanitrohexaazaisowurtzitane), GUDN (guanyldylurea dinitride), FOX-7 (1,1-diamino-2, 2-dinitroethene). Examples of other suitable known highly energetic materials include picrite (nitroguanidine), aromatic nitramines such as tetryl, ethylene dinitramine, and nitrate esters such as nitroglycerine (glycerol trinitrate), butane triol trinitrate or pentaerythritol tetranitrate, DNAN (dinitroanisole), trinitrotoluene (TNT),

According to a further aspect of the invention there is provided a method for the synthesis of an energetic material using the flow reactor as defined herein.

Preferably the method for the synthesis of an energetic material using the flow reactor defined herein comprises the steps of
i. preparing input flow reagent A,
ii. preparing input flow reagent B,
   wherein the first input flow reagent (A) and second input flow reagent (B) are selected to provide an energetic material when passed through the flow reactor,
iii. causing the input flow reagents A and B to enter the mixing zone said mixing zone comprising at least one mixing plate;
iv. causing the mixing zone to be maintained at a temperature of less than 20°C,
v. causing the mixed flow to pass through into the reaction zone, said reaction zone comprising at least one residence plate, heating the reaction zone to greater than 25°C.

According to a further aspect of the invention there is provided a method for the flow synthesis manufacture of RDX, comprising the steps of
i. preparing input flow reagent A, comprising hexamine pre-dissolved in water or glacial acetic acid,
ii. preparing input flow reagent B comprising greater than 95% concentration nitric acid,
iii. causing the input flow reagents A and B to enter the mixing zone at a flow rate, so as to cause a total nitric acid concentration of greater than 90%, in said flow reactor,
iv. cooling the mixing zone to less than 20°C,
v. causing the mixed flow to pass through into the reaction zone, heating the reaction to greater than 25°C,
vi. optionally quenching the output flow from the reaction zone, to cause precipitation of RDX; preferably he quenching agent is cooled below 10°C.

The use of a two-stage or multi-stage temperature zones in a reactor for producing energetic materials has been shown to improve yields and throughput. Previous experiments for the synthesis of RDX using the aqueous hexamine method below in experiment 1 and Table 1 had comparatively lower yields at high temperatures and lower throughputs per volume of material at lower temperatures. The multi-stage temperature reactor addresses this issue by providing a means of cooling during the mixing in the mixing zone, and a means of heating the residence plates, in the reaction zone. Without being bound by theory, it is proposed that the cooling provides better thermal control for the initial exothermic reaction, which may release gaseous by products. However, once the initial exotherm is controlled, it is then beneficial to heat the reaction so as to cause quicker conversion to the energetic material. This has been shown with RDX synthesis, subsequently resulting in higher throughput. The nitration of any precursor material will proceed via a high exothermic reaction during the mixing zone.

The addition of dry hexamine to nitric acid may cause unwanted exothermic reactions. Therefore it is desirable for flow synthesis to avoid this method step and highly preferably the step i) of introducing pre-dissolved hexamine i.e. aqueous hexamine or hexamine in glacial acetic acid directly into the reactor mitigates this problem, as the only time concentrated nitric acid comes into contact with the hexamine is in the reactor cell. The pre-dissolved hexamine is stable, and can be either prepared as input reagent A, immediately before introduction into the reaction cell or it may be procured and/or prepared and stored as a stable solution, ready for later use.

The hexamine when pre-dissolved may be present in any amount up to a saturated solution. For hexamine dissolved in water, preferably the hexamine may be in the range of from 0.2g to 0.8g of hexamine per gram of water. The hexamine when dissolved in water, is aqueous hexamine.

The input flow reagent A is alternatively hexamine pre-dissolved in acetic acid, which may be in the form of glacial acetic acid. When the input flow reagent A, is glacial acetic acid, the hexamine may be dissolved in the range of from 0.2g to 0.62g of hexamine per gram of glacial acetic acid.

Without being bound by theory, the use of glacial acetic acid, has been shown to decrease the concentration of the nitric acid required to nitrate the hexamine when in the reactor cell, thereby improving the efficiency of the process.

The may comprise ammonium nitrate solution, that is aqueous hexamine pre-dissolved in water and further comprising ammonium nitrate, wherein the ammonium nitrate may be present greater than 30%wt% preferably at least 60%wt% of aqueous solution with hexamine dissolved in water. The ammonium nitrate may be dissolved in the range of from 0.2g/g to 1.3g/g of hexamine per gram of water. The use of ammonium nitrate increases the solubility of hexamine in water, thereby allowing more reagent into the reaction cell.

In a further arrangement, input flow reagent A hexamine in glacial acetic acid may comprise ammonium nitrate.

The flow reagent A is pre-dissolved hexamine, this may reduce the total concentration of the nitric acid in the flow reactor, therefore preferably in step iii) the ratio of reagent A to reagent B may be greater than 1:3, to ensure a high excess of nitric acid in the reactor, preferably in step iii) the ratio of reagent A to reagent B is in the range of 1:3 to 1:20, more preferably 1:5 to 1:15. The ratio may be greater than 1:20. The excess of nitric acid may be any value such as for example 1:20 to 1:40 or higher. A further consideration, with an excess of nitric acid in the system is that it may restrict the volume of other starting materials in the reactor limiting the throughput of pre-dissolved hexamine, and hence reducing the yield.

Preferably, in step iii), the total nitric acid concentration is in the range of 93- 99%, in said flow reactor, this is caused by ensuring the correct ratio of A:B i.e. an excess of concentrated nitric acid via input reagent B is present in the reactor.

The input flow reagent B preferably comprises 95-99% concentration nitric acid, more preferably at least 99% concentration nitric acid.

In one arrangement in step ii), the nitric acid in input flow reagent B further comprises a further nitrating agent, such as for example further acids, such as, for example oleum, metal nitrites, such as, for example NaNO₂, or ammonium nitrate.

The avoidance of nitric acid in input flow reagent A, allows the hexamine starting material to be dissolved, without the nitration reaction starting. This prevents product from precipitating out before it is caused to enter into the flow reactor, and may prevent blockage of the flow reactor and associated mixing chambers.

The total nitric acid concentration when input flow reagent B contains only nitric acid as the sole nitration agent, the concentration must be sufficient for nitration to occur, such as for example greater than 92% concentration.

The flow rate of input flow reagent A may be selected from any suitable flow rate with input flow reagent B, to provide a total nitric acid concertation capable of causing nitration of hexamine, such as for example in the range of greater than 92%. The actual flow rate of input flow reagent A may be µL through to millilitres to litres, depending on the capacity of the flow cell.

The flow rate of input flow reagent B may be selected from any suitable flow rate with input flow reagent A to provide a total nitric acid concertation capable of causing nitration of hexamine, such as for example in the range of greater than 92% concentration. The actual flow rate of input flow reagent A may be µL through to millilitres to litres, depending on the capacity of the flow cell.

The use of higher concentrations of acid in input flow reagent B, allows the volume/flow rate of Input flow reagent B to be reduced, i.e. a lower ratio, which may lead to reducing the quantity of nitric acid being used. This may be caused by using other strong acids, such as for example oleum.

### Experimental reagents

99 % HNO3 was purchased from Honeywell in a 500 mL quantity. Cat. 84392-500ML, Lot. No. I345S.

70 % HNO3 was purchased from Fisher scientific in a 2.5 L quantity. Code: N/2300/PB17. Lot: 1716505.

Hexamine was purchased from Sigma-Aldrich in a 250 g quantity. Cat. 797979-250G, Lot. No. MKCJ7669.

### Flow reactor used: Protrix Reactor

### General Experimental Method- Experiment 1- single temperature zone

| | |
|---|---|
| Pump A: | hexamine in water, (or acetic acid, or ammonium nitrate) |
| Pump B: | 99 % HNO₃ |

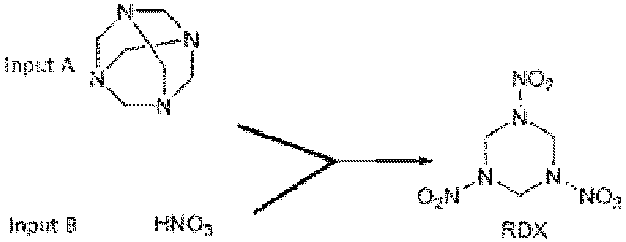

The general reaction is shown above, where the input flow reagent A comprises hexamine dissolved in a solvent (water, water/ammonium nitrate(AN) and glacial acetic acid), and input flow reagent B comprises the nitrating agent 99% concentrated nitric acid. The input flow reagent A and input flow reagent B are caused to react in the flow reactor to furnish the product RDX.

### Experimental results from Exp 1

**Table 1- single temperature zone**

| **Exp.** | **Input A solvent** | **Temp °C** | **hexamine concentration / g g-1** | **Flow rate (hexamine)** | **Flow rate(B) (acid)** | **Final cone. / g g-1** | **Reaction time / s** | **Yield %** |
|---|---|---|---|---|---|---|---|---|
| 14 | Water | 14 | 0.429 | 1.000 | 8.000 | 0.0378 | 59 | 42.4 |
| 16 | Acetic acid | 14 | 0.387 | 1.330 | 8.000 | 0.0470 | 57 | 56.7 |
| 17 | Acetic acid | 20 | 0.387 | 1.330 | 8.000 | 0.0470 | 57 | 51.5 |
| 18 | Acetic acid | 20 | 0.387 | 0.667 | 4.000 | 0.0471 | 114 | 52.5 |
| 19 | Acetic acid | 20 | 0.387 | 2.333 | 6.998 | 0.0899 | 59 | 22.4 |
| 20 | Acetic acid | 20 | 0.387 | 1.167 | 3.490 | 0.0902 | 114 | 26.8 |
| 21 | Acetic acid | 20 | 0.387 | 1.866 | 7.464 | 0.0690 | 57 | 41.9 |
| 22 | Acetic acid | 20 | 0.387 | 0.933 | 3.732 | 0.0690 | 109 | |
| 23 | AN/water | 14 | 0.342 | 1.330 | 8.000 | 0.0453 | 59 | 25.1 |
| 24 | AN/water | 14 | 0.342 | 0.667 | 4.000 | 0.0454 | 114 | 32.6 |
| 25 | AN/water | 20 | 0.342 | 1.330 | 8.000 | 0.0453 | 56 | 24.3 |
| 26 | AN/water | 20 | 0.342 | 0.667 | 4.000 | 0.0454 | 112 | 31.7 |
| 28 | Water | 5 | 0.444 | 0.500 | 4.000 | 0.0391 | 134 | 47.7 |
| 29 | Water | 5 | 0.444 | 0.900 | 3.600 | 0.0753 | 119 | 7.4 |
| 30 | Water | 5 | 0.444 | 0.711 | 3.790 | 0.0576 | 116 | 16.5 |
| 31 | Water | 10 | 0.444 | 0.500 | 4.000 | 0.0391 | 121 | 42.4 |
| 32 | Water | 14 | 0.444 | 0.500 | 4.000 | 0.0391 | 118 | 35.3 |
| 33 | Water | 1 | 0.444 | 0.500 | 4.000 | 0.0391 | 170 | 51.0 |
| 34 | Water | 1 | 0.444 | 1.000 | 8.000 | 0.0391 | 83 | 38.5 |
| 35 | Water | 1 | 0.444 | 0.362 | 4.138 | 0.0277 | 178 | 57.8 |
| 36 | Water | 1 | 0.444 | 0.432 | 4.068 | 0.0335 | 178 | 57.4 |
| 37 | Water | 1 | 0.444 | 0.566 | 3.934 | 0.0448 | 155 | 46.0 |
| 38 | Water | 1 | 0.444 | 0.629 | 3.871 | 0.0503 | 152 | 30.2 |
| 39 | Water | 1 | 0.444 | 0.250 | 2.000 | 0.0391 | 355 | 57.8 |
| 41 | Water | 1 | 0.444 | 1.000 | 8.000 | 0.0391 | 50 | 25.6 |
| 43 | Water | 1 | 0.444 | 0.298 | 2.390 | 0.0391 | 170 | 54.2 |
| 44 | Water | 1 | 0.444 | 0.587 | 3.910 | 0.0466 | 155 | 34.2 |
| 45 | Water | 1 | 0.444 | 0.608 | 3.890 | 0.0485 | 151 | 32.2 |
| 46 | Water | 1 | 0.444 | 0.362 | 4.140 | 0.0277 | 178 | 55.7 |
| 47 | Water | 14 | 0.429 | 1.000 | 8.000 | 0.0378 | 74 | 42.4 |
| 48 | Acetic acid | 14 | 0.387 | 1.330 | 8.000 | 0.0470 | 71 | 56.7 |
| 49 | Acetic acid | 20 | 0.387 | 1.330 | 8.000 | 0.0470 | 71 | 51.5 |
| 50 | Acetic acid | 20 | 0.387 | 0.667 | 4.000 | 0.0471 | 143 | 52.5 |
| 51 | Acetic acid | 20 | 0.387 | 2.333 | 6.998 | 0.0899 | 74 | 22.4 |
| 52 | Acetic acid | 20 | 0.387 | 1.167 | 3.490 | 0.0902 | 143 | 26.8 |
| 53 | Acetic acid | 20 | 0.387 | 1.866 | 7.464 | 0.0690 | 71 | 41.9 |
| 54 | Acetic acid | 20 | 0.387 | 0.933 | 3.732 | 0.0690 | 137 | - |
| 55 | AN/water | 14 | 0.342 | 1.330 | 8.000 | 0.0418 | 73 | 25.1 |
| 56 | AN/water | 14 | 0.342 | 0.667 | 4.000 | 0.0419 | 142 | 32.6 |
| 57 | AN/water | 20 | 0.342 | 1.330 | 8.000 | 0.0418 | 70 | 24.3 |
| 58 | AN/water | 20 | 0.342 | 0.667 | 4.000 | 0.0419 | 140 | 31.7 |

Table 1 shows the different carrier solvents for the input reagent A, selected from water, acetic acid, or ammonium nitrate solution, using one temperature for the mixing and reaction zones.

The temperature in Table 1 is the temperature within the reactor cell. There are trends which may indicate that the use of lower temperatures increases the throughput and yield. Without being bound by theory this may be due to the limitation on competing hydrolysis reactions.

The flow rates in table 1 are indicated as (ml/minute), the results indicate that a suitable concentration of nitric acid in the reactor can be achieved, that is sufficient to cause nitration of the pre-dissolved hexamine (aqueous hexamine, aqueous hexamine and ammonium nitrate, and hexamine in glacial acetic acid) to furnish RDX. Previous attempts have relied upon using hexamine pre-dissolved in nitric acid, as one of the flow reagents. As mentioned earlier, the dissolving of dry hexamine powder in nitric acid, causes large exothermic reactions, so the process defined herein allows the hexamine to be introduced into the reactor in a more safe pre-dissolved form.

The maximum percentage yield, appears to be when the maximum concentration is around 0.035 g/g, or 0.85 mL hexamine solution per 8 mL acid. To maximise RDX output, the optimum concentration is around 0.045 g/g (1.15 mL) hexamine solution per 8 mL acid. The optimum output is achieved by finding a compromise between percentage yield and residence time, i.e. time in the reactor.

RDX synthesis using a flow reactor poses more challenging design issues than simply pumping solutions from well-known and quantified batch chemistry. This is mainly due to the fact that the starting material hexamine is solid, and RDX can potentially precipitate out of solution during the reaction. Precipitation of the RDX during the transition through the flow reactor can happen as the acid concentration drops and water content increases, thereby leading to potential blockages in the flow reactor, this could lead to catastrophic events, and so the nitric acid concentration in the flow chemistry.

### Experiment 2- two stage reactor

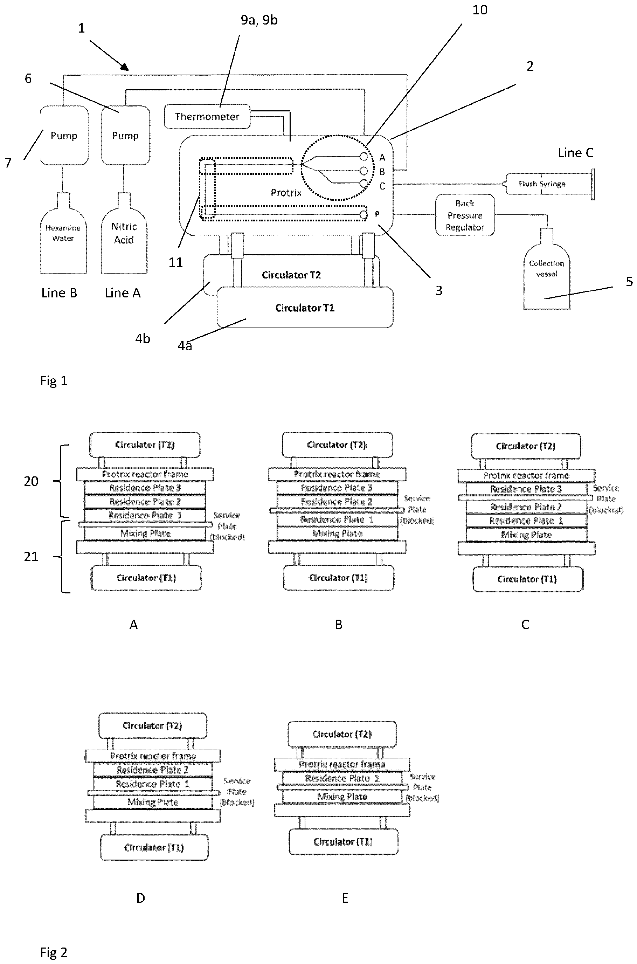

The experiment below explored the effect of varying the temperature of both T1 (mixing zone) and T2 (reaction zone), flow rate, ratio of reagents and pressure. The below was carried out in the same experimental conditions as experiment 1, except with separately cooled mixing zone, and separately heated reaction zone. The experimental layout is shown in Fig 1.

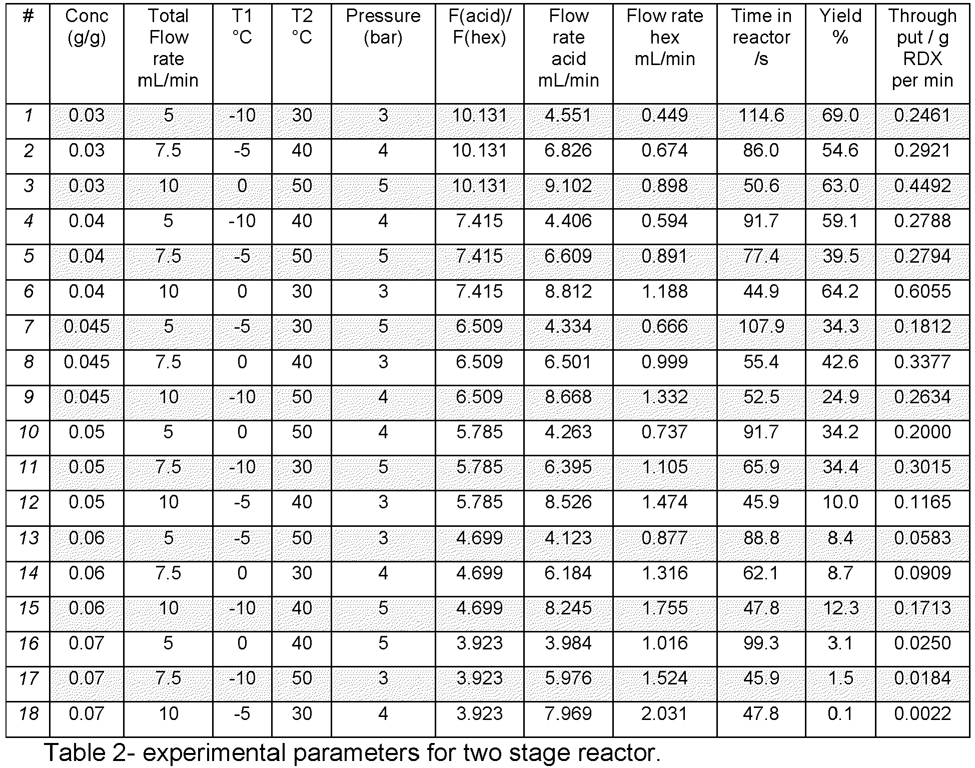

The hexamine acid ratio has a significant bearing on both cost of reagents and yield so it is important to ensure that these are optimised.

T1 is the temperature in the mixing zone, and T2 is the temperature in the reaction zone.The flow rate was varied between 5 and 10 mL/min, the total hexamine concentration used was varied between 0.3 and 0.7 g/g with respect to the total volume this translated into volume ratio of the reagents meant that these were varied between 10.13 and 3.92 acid to 1 hexamine. Finally, the pressure was varied between 3 and 5 bar.

It can be seen from the comparison of Table 1 with a single heating zone and Table 2 with multiple temperature zones, that yields for the same chemical reaction have been increased by over 15%.

For example, looking at lines in 3 and 6 in Table 2. These show yields in the region of 63.0 to 64.2% with a total flow rate of 10 m/Lmin⁻¹ entering the reactor. The concertation for both these experiments was in the range of 0.04 gg-⁻¹ and 0.03 gg⁻¹ hexamine per acid, a reactor pressure of 3 to 5 bar, a T1 temperature of 0 °C and a T2 temperature between 30 and 50 °C. In contrast with a single temperature zone in Table 1. The yields in table 2 show a significant reduction in the required residence time and a clear increase in yield. For example, the experiments on lines 33, 34, 39, 41 and 43 Table 1, fall within the same concentration and pressure range as lines 3 and 6 in Table 2, however the single temperature zone experiments do not reach the yields and throughputs generated by the two temperature zone method.

The experiments in table 1, were carried out at 1 °C and in table 2 the mixing zone is 0°C (the temperature values for table 1 and table 2 can be considered substantially the same for comparison purposes i.e. ~0 °C). However despite the same initial temperature the yield is significantly lower when using comparable flow rates see line 34 for a total flow rate input of 9 mLmin⁻¹ generating a yield of 38.5%. This reduction is a result of there being no increased temperature T2 temperature zone.

The two stage reactor may be used for the Bachmann route, there is provided a method for the flow synthesis manufacture of RDX, comprising the steps of
i. preparing input flow reagent A comprising greater than 95% concentration nitric acid and NH₄NO₃;
ii. preparing input flow reagent B comprising hexamine dissolved in acetic acid;
iii. preparing input flow reagent C, comprising acetic anhydride;
iv. causing the input flow reagents A, B and C to enter a flow reactor to mix in a mixing zone, at a first temperature in a first temperature zone, preferably less than 20°C
v. maintaining the flow in a reaction zone, said reaction zone maintained at a second temperature in the second temperature zone; preferably to less than 90 °C,
vi. causing the input flow reagents to react in the reaction zone.

Exemplary embodiments of the device in accordance with the invention will now be described with reference to the accompanying drawings in which:-
Figures 1 shows a two stage flow reactor arrangement.
Figures 2 A to E shows alternative flow reactor arrangements.

Turning to figure 1 there is provided a schematic of a flow reactor 1 for the Woolwich reaction using the experiment 2 conditions. The reagents in Line A, and Line B, are fed via associated pumps 6 and 7, to the Protrix flow reactor 2. In the arrangement shown, lines B and C can be a premix, or as shown Line C is a flush of nitric acid. The reactor cell 2 can be configured to allow all three Line A, B and C to enter at the same time, if further input flow reagents are required. A thermometer 9a monitors the temperature in the mixing zone 10 of the flow reactor 2, and applies cooling from the heating and cooling source 4a which is water circulator (T1). The reactants flow through the residence plate in the reaction zone 11, in the reactor cell 2, where thermometer 9b monitors the temperature in the reaction zone 11, and applies heating or cooling from the heating and cooling source 4b, a water circulator (T2).

The final reactant emerges at the product exit 3, which feeds into a collection vessel 5, for further processing.

Turning to figure 2 A-E shows different arrangements of the reactor cell. In arrangement A, there is a mixing zone 21 with a mixing plate which has its own water circulator T1 to control the temperature.

The reaction zone 20 comprises three residence plates 1, 2, 3, which have their own water circulator T2 to control the temperature. A service plate provides a thermal barrier between the mixing zone 21 and the reaction zone 20, to ensure there are discreet temperature zones. Further service plates and further water circulators may be used to create further temperature zones.

Arrangements B and C, show further residence plates being sequentially added to the mixing zone and removed from the reaction zones. Alternatively more residence plates could be added to both the mixing zone and reaction zones.

Arrangements D and E show the removal of residence plates, which reduces the residence time of the reagents in the reactor. The output from one reactor cell comprising the mixing/reaction zone, could be fed into a second or third reactors where further reagents are needed to accomplish multi step reaction pathways.

## Claims

1. A flow reactor for the synthesis of energetic materials, comprising;
a first input flow reagent, and a second input flow reagent,
a flow reactor, comprising at least two temperature zones within the flow reactor.

2. A flow reactor according to claim 1, wherein the flow reactor comprises
a mixing zone, comprising at least one mixing plate to mix together both the first input flow reagent, and the second input flow reagent, said mixing zone maintained at a first temperature in a first temperature zone, and
a reaction zone, comprising at least one residence plate which forms the microchannel path in which the reaction occurs, said reaction zone maintained at a second temperature in a second temperature zone;
wherein the first temperature is less than the second temperature.

3. A flow reactor according to claim 1 or claim 2, wherein the mixing zone comprises at least one further residence plate, such that the mixing plate and the further residence plate are maintained at the first temperature.

4. A flow reactor according to any one of the preceding claims wherein the reaction zone comprises a plurality of residence plates, all maintained at the second temperature.

5. A flow reactor according to any one of the preceding claims wherein the first temperature zone comprises a first water/oil circulator and the second temperature zone comprises a second water/oil circulator.

6. A flow reactor according to any one of the preceding claims wherein there is a third, fourth or further reaction zone.

7. A flow reactor according to any one of the preceding claims, wherein after the reaction zone, there is a further mixing zone, to introduce a further input flow reagent.

8. A flow reactor according to any one of the preceding claims wherein the mixing plates and/or residence plates are selected from a thermally conductive ceramic, a metal or metal alloy.

9. A flow reactor according to claim 8 wherein the ceramic is silicon carbide.

10. A flow reactor according to any one of the preceding claims wherein the first input flow reagent (A) and second input flow reagent (B) are selected to provide an energetic material when passed through the flow reactor.

11. A flow reactor according to any one of the preceding claims wherein the energetic material is a poly nitrated moiety selected from a nitramine, heterocycle, aromatic, aromatic heterocycle, or aliphatic hydrocarbon.

12. A method for the synthesis of an energetic material using the flow reactor as claimed in any one of the proceeding claims.

13. A method according to claim 12, comprising the steps of
i. preparing input flow reagent A,
ii. preparing input flow reagent B,
wherein the first input flow reagent (A) and second input flow reagent (B) are selected to provide an energetic material when passed through the flow reactor,
iii. causing the input flow reagents A and B to enter the mixing zone said mixing zone comprising at least one mixing plate;
iv. causing the mixing zone to be maintained at a temperature of less than 20°C,
v. causing the mixed flow to pass through into the reaction zone, said reaction zone comprising at least one residence plate, heating the reaction zone to greater than 25°C.

14. A method according to claim 12 and 13, wherein the mixing zone temperature is in the range of -15°C to +15 °C.

15. A method according to claim 12 to claim 14, wherein the reaction zone temperature is in the range of 25°C to 90°C.

16. A method for the flow synthesis manufacture of RDX, comprising the steps of
i. preparing input flow reagent A, comprising hexamine pre-dissolved in water or glacial acetic acid,
ii. preparing input flow reagent B comprising greater than 95% concentration nitric acid,
iii. causing the input flow reagents A and B to enter the mixing zone at a flow rate, so as to cause a total nitric acid concentration of greater than 90%, in said flow reactor,
iv. cooling the mixing zone to less than 15°C,
v. causing the mixed flow to pass through into the reaction zone, heating the reaction to greater than 25°C
vi. optionally quenching the output flow from the reaction zone, to cause precipitation of RDX.
